# FASCICULE DE BREVET EUROPEEN

(11) **EP 1 604 128 B1**
(45) Date de publication et mention de la délivrance du brevet: **10.08.2011**
(21) Numéro de dépôt: 03785702.6
(22) Date de dépôt: 01.12.2003
(51) Int. Cl.: F16D 65/20, F16D 65/14, F16D 65/40, B60T 7/02, B60T 13/52

(54) **CIRCUIT DE FREINAGE COMPORTANT UN FREIN DE PARKING HYDRAULIQUE**
BREMSSYSTEM MIT EINER HYDRAULISCHEN FESTSTELLBREMSE
BRAKING CIRCUIT COMPRISING A HYDRAULIC PARKING BRAKE

(30) Priorité: 29.11.2002 FR 0215244
(43) Date de publication de la demande: 14.12.2005
(73) Titulaire: ROBERT BOSCH GMBH, 70442 Stuttgart (DE)
(72) Inventeur: DUPUIS, Vincent, F-94300 VINCENNES (FR); GUDEHUS, Thorsten, F-75017 PARIS (FR); HURWIC, Aleksander, Bosch Systemes De Freinage, F-93700 Drancy (FR)
(74) Mandataire: Hurwic, Aleksander Wiktor
(86) Numéro de dépôt international: PCT/EP2003/013525
(87) Numéro de publication internationale: WO 2004/051111

(56) Documents cités:
- EP-A- 0 526 273
- WO-A-02/062633
- DE-A- 3 518 715
- US-A- 5 127 495
- US-A- 5 161 650
- US-A- 5 954 162

## Description

La présente invention concerne un circuit de freinage dont le maître cylindre associé au servomoteur du frein principal de service constitue la source de fluide sous pression d'actionnement hydraulique du frein de parking.

On connaît de nombreux circuits ou systèmes de freinage pour véhicule automobile dont la fonction est soit de diminuer ou d'annuler la vitesse du véhicule équipé, soit de le maintenir immobile, notamment lorsque le véhicule se trouve à l'arrêt de manière prolongée.

On distingue ainsi une première fonction, dite de frein de service ou actif, et une deuxième fonction, dite de frein de parking ou encore de stationnement.

Le circuit de freinage comporte donc au moins un mécanisme de frein destiné à assurer la fonction de frein principal, dit de service ou actif, et un mécanisme de frein de parking destiné à assurer la fonction de frein de parking. Les deux mécanismes peuvent être intégrés dans un ensemble unique.

Les mécanismes de frein selon l'état de la technique sont essentiellement constitués par deux grandes familles, à savoir les freins à disque d'une part et les freins à tambour d'autre part, freins dont les fonctionnements respectifs sont bien connus et ne seront pas rappelés en détail dans la suite.

On connaît aussi des mécanismes hybrides de frein qui combinent l'utilisation d'un frein à disque et d'un frein à tambour pour assurer respectivement la fonction de frein principal et la fonction de frein de parking, chaque frein comportant des moyens de blocage actionnés par un dispositif d'actionnement hydraulique conventionnel pour le frein de service et par un dispositif d'actionnement de type mécanique pour le frein de parking.

Le « frein à main » constitue le dispositif d'actionnement mécanique du frein de parking qui équipe aujourd'hui le plus couramment les véhicules automobiles.

Le fonctionnement d'un frein à main est bien connu et consiste essentiellement pour le conducteur à exercer un effort de traction sur un levier de frein à main agencé dans l'habitacle pour provoquer l'application d'un effort de freinage de parking ou de stationnement. Par conséquent, l'énergie nécessaire au freinage de parking est fournie uniquement par l'effort musculaire du conducteur.

C'est une des raisons pour lesquelles, les dispositifs mécaniques du type « frein à main » sont aujourd'hui notamment considérés comme désagréables et pénibles à utiliser, notamment pour les personnes ayant peu de force musculaire.

De plus, si le conducteur exerce un effort insuffisant sur le levier de frein à main, voire oublie de l'actionner, le véhicule n'est alors pas correctement immobilisé, ce qui peut provoquer des accidents.

On comprend dès lors qu'un frein de stationnement mettant en oeuvre un dispositif d'actionnement mécanique de type « frein à main » n'est pas aussi fiable et d'un fonctionnement aussi sûr que souhaité.

D'autres dispositifs d'actionnement de frein de stationnement ont été développés et notamment des dispositifs d'actionnement pouvant être actionnés électriquement ou par un fluide, typiquement hydraulique.

Ainsi, la présente invention se rapporte principalement à un frein de parking à activation par un fluide, typiquement un liquide, de l'application du frein de parking, ainsi qu'à des moyens de blocage et/ou de verrouillage mécanique du frein en état ou condition activée.

Le document EP-A-0.526.273 décrit et représente un frein à disque muni d'un frein de parking actionné hydrauliquement par une pression exercée par le conducteur sur la pédale de frein du véhicule, assurant l'application des patins sur les faces opposées du disque. Tout en maintenant le pied sur la pédale de frein, le conducteur manoeuvre un interrupteur électrique de commande du verrouillage du frein de parking permettant de mettre sous tension un moteur électrique entraînant en translation rectiligne selon l'axe du piston un manchon coaxial audit piston, et ceci jusqu'au verrouillage du piston dans une position dans laquelle les patins sont appliqués sur le disque. L'application hydraulique préalable de l'effort de freinage de parking permet de recourir à un moteur électrique de verrouillage de faible puissance.

Le frein de parking décrit dans le document EP-A-0.526.273 présente de nombreux inconvénients. Tout d'abord on demande au conducteur, de générer musculairement la pression hydraulique nécessaire à l'application des patins sur le disque.

D'autre part, le moteur électrique préconisé ne permet pas d'augmenter la force d'application des patins sur le disque. Il en résulte que, si le conducteur n'appuie pas du tout ou pas suffisamment fort sur la pédale de frein, le véhicule ne sera pas correctement immobilisé, ce qui peut provoquer un accident.

Le document US 5 127 495 A montre un circuit de freinage d'après le préambule de la revendication 1.

C'est par conséquent un but de la présente invention d'offrir un frein de parking fiable et d'un fonctionnement sûr.

C'est également un but de la présente invention d'offrir un frein de parking associé à un système de commande à partir de l'habitacle ayant un faible encombrement.

C'est également un but de la présente invention d'offrir un frein de parking ayant un faible encombrement au niveau de la roue à immobiliser.

C'est aussi un but de la présente invention d'offrir un frein de parking présentant une faible masse et notamment une faible masse de la partie non suspendue.

C'est aussi un but de la présente invention d'offrir un frein de parking de construction simple.

C'est également un but de la présente invention d'offrir un frein de parking d'un prix de revient modéré.

C'est aussi un but de la présente invention d'offrir un frein de parking facile à actionner sans effort important du conducteur.

L'invention propose une nouvelle conception d'architecture pour actionner le frein de parking d'un circuit de freinage qui permette de remédier à ces inconvénients.

L'invention propose plus particulièrement un circuit de freinage, notamment pour véhicule automobile, comportant au moins un frein principal, dit de service ou actif, et un frein de parking du type comportant des moyens de blocage à activation par une source de fluide sous pression et des moyens de verrouillage mécanique dans une condition appliquée, caractérisé en ce que ladite source de fluide sous pression est une source de liquide de frein sous pression pour l'actionnement du frein principal de service comportant un maître cylindre de freinage actionné par un servomoteur actif pneumatique d'assistance au freinage appartenant au circuit de freinage.

Avantageusement, le dispositif d'actionnement selon l'invention est de construction simple, fiable et de fonctionnement sûr, d'un prix de revient modéré et de préférence est associé à un organe de commande dans l'habitacle ayant un très faible encombrement et qui soit facile à actionner sans effort important du conducteur.

Selon l'invention, la mise en oeuvre du maître cylindre de freinage actionné par le servomoteur actif constitue une source de haute pression hydraulique, qui étant déjà disponible sur un véhicule moderne, permet de limiter le coût du frein de parking.

Selon d'autres caractéristiques de l'invention :
- le circuit de freinage comporte une commande d'activation du frein de parking indépendante de la commande du frein principal de service ou actif ;
- la commande d'activation du frein de parking comporte un calculateur pour contrôler l'amenée du liquide de frein sous pression ;
- le circuit de freinage est du type comportant un frein de parking à disque qui comporte un piston formant un moyen hydraulique d'application d'au moins un patin formant un moyen d'immobilisation sur un disque formant un organe tournant, des moyens d'amener d'un fluide sous pression suffisante pour être susceptible, sur commande, d'appliquer fermement les patins sur le disque, des moyens de blocage du piston dans une première condition dans laquelle les patins sont fermement appliqués sur le disque, et caractérisé par le fait que les moyens de blocage comportent une clavette et un actionneur de déplacement sur commande de ladite clavette, ledit actionneur de déplacement de la clavette comporte une première chambre hydraulique et une deuxième chambre hydraulique opposée à la première chambre hydraulique et une vanne susceptibles de relier, sur commande, lesdites chambres hydrauliques à une source de liquide de frein sous haute pression de manière à entraîner la clavette entre une première position dans laquelle le piston du frein est libre de reculer et une deuxième position dans laquelle la clavette bloque le recul du piston, et en ce que la surface d'application sur la clavette de la pression régnant dans la première chambre hydraulique est différente de la surface d'application sur la clavette de la pression régnant dans la deuxième chambre hydraulique ;
- le frein de parking comporte un moyen d'interconnexion hydraulique des deux chambres hydrauliques pour assurer l'égalité des pressions régnant dans ces deux chambres hydrauliques ;
- une première chambre hydraulique est disposée à une première extrémité axiale (d'axe Y) de la clavette et la deuxième chambre hydraulique est disposée à une deuxième extrémité axiale (d'axe Y) de la clavette opposée à ladite première extrémité axiale ;
- la clavette est munie de moyens d'isolation hermétique typiquement des joints assurant l'isolation hermétique entre, d'une part la première chambre hydraulique et une partie centrale de la clavette reliée hydrauliquement au cylindre du piston de frein et, d'autre part ladite partie centrale de la clavette de la deuxième chambre hydraulique ;
- la vanne est une vanne à commande électrique ouverte au repos ;

Selon d'autres caractéristiques n'appartenant pas à l'invention:
- l'axe (Y) de déplacement de ladite clavette est un axe rectiligne orthogonal ou sensiblement orthogonal à l'axe (X) du piston ;
- le frein de parking comporte en outre un mécanisme de rattrapage d'usure de patins de freins prenant appui sur une face arrière du piston opposée à la face avant du piston prenant appui sur le patin de frein et en ce que la clavette prend appui sur le côté du dispositif de rattrapage d'usure des patins de frein opposés aux côtés de ce dispositif prenant appui sur le piston ;
- le frein de parking est du type frein à tambour.

De préférence, le circuit de freinage comporte un frein à disque de parking comportant au moins un piston susceptible d'être entraîné par un fluide sous pression, typiquement du liquide de frein, monté à coulissement dans un alésage borgne pratiqué dans un étrier de frein, l'alésage formant un cylindre.

Grâce à la source de fluide sous pression selon l'invention, on fait avancer le piston en direction du disque et ainsi applique fermement les patins sur ce dernier c'est à dire avec une force suffisante pour assurer l'immobilisation du véhicule.

De préférence, on tient compte d'une relaxation possible de frein de parking dû au refroidissement du frein.

A ce moment, un actionneur, typiquement une vanne ouverte au repos, déplace une clavette d'immobilisation du piston avantageusement dans une direction non parallèle à l'axe de ce dernier empêchant son recul par rapport au disque d'une distance qui risquerait de relâcher les freins de parking.

Avantageusement, l'actionneur déplace la clavette en translation rectiligne selon un axe orthogonal ou sensiblement orthogonal à l'axe du piston. Toutefois, un déplacement en translation oblique, en rotation ou parallèlement à l'axe du piston ne sort pas du cadre de la présente invention.

Dans l'exemple de réalisation la clavette vient bloquer le recul d'un dispositif, de préférence de types vis-écrou, de rattrapage d'usure de patins en appui sur le piston. Avantageusement, la trajectoire de la clavette de blocage se situe à l'arrière de l'élément à bloquer (piston ou dispositif de rattrapage d'usure de patins). Toutefois, la mise en oeuvre de clavettes ou analogues pénétrant dans un évidement pratiqué dans l'élément à bloquer (piston ou dispositif de rattrapage d'usure de patins) ne sort pas du cadre de la présente invention.

L'actionneur mis en oeuvre est déplacé par un fluide sous pression. Dans l'exemple préféré de réalisation du frein de parking, la clavette forme un piston hydraulique entraîné par le liquide de frein.

De plus, on dispose ainsi de forces d'amplitude très importes pour manoeuvrer le piston et la clavette.

Avantageusement, le frein de parking, selon la présente invention assure également la fonction de frein principal de service.

Avantageusement, le frein de parking selon la présente invention est un frein à étrier flottant par exemple de type à piston unique.

L'invention sera mieux comprise à la lecture de la description ci-après et des figures annexées données comme des exemples non limitatifs et sur lesquelles :
- la figure 1 est une représentation schématique d'un mode de réalisation d'un circuit de freinage selon l'invention ;
- la figure 2 est une représentation analogue à la figure 1 qui illustre une variante de réalisation dans laquelle un même mécanisme de frein assure les fonctions de frein de service et de frein de parking ;
- la figure 3 est une vue de dessus avec arrachement partiel d'un exemple de réalisation d'un frein à disque de parking au repos qui est susceptible d'être activé hydrauliquement conformément à l'invention;

- la figure 4 est une vue de dessus avec arrachement partiel du frein de parking de la figure 3 lors d'une première étape du processus de serrage de frein de parking ;
- la figure 5 est une vue de dessus avec arrachement partiel du frein de parking de la figure 3 lors d'une deuxième étape du processus de serrage de frein de parking ;
- la figure 6 est une vue de dessus avec arrachement partiel du frein de parking de la figure 3 lors d'une troisième étape du processus de serrage de frein de parking ;
- la figure 7 est une vue de dessus avec arrachement partiel d'une première variante de réalisation d'un frein de parking ;
- la figure 8 est une vue en coupe de la partie arrière d'une deuxième variante de réalisation d'un frein de parking ;
- la figure 9 est une vue en coupe partielle de l'exemple préféré de réalisation d'un frein de parking ;
- la figure 10 est un schéma explicatif illustrant une première étape d'un processus de serrage c'est-à-dire de blocage et/ou de verrouillage du frein de la figure 9 ;
- la figure 11 est un schéma explicatif illustrant une deuxième étape d'un processus de serrage c'est-à-dire de blocage et/ou de verrouillage du frein de la figure 9 ;
- la figure 12 est un schéma explicatif illustrant une troisième étape d'un processus de serrage c'est-à-dire de blocage et/ou de verrouillage du frein de la figure 9 ;
- la figure 13 est un schéma explicatif illustrant une première étape d'un processus de serrage c'est-à-dire de déblocage et/ou de déverrouillage du frein de la figure 9 ;
- la figure 14 est un schéma explicatif illustrant une deuxième étape d'un processus de déblocage et/ou de déverrouillage du frein de la figure 9 ;
- la figure 15 est un schéma explicatif illustrant une troisième étape d'un processus de déblocage et/ou de déverrouillage du frein de la figure 9 ;
- la figure 16 est une vue en coupe d'un détail d'une variante de réalisation du frein de la figure 9 ;
- la figure 17 est un schéma explicatif illustrant une première étape d'un processus de serrage c'est-à-dire de blocage et/ou de verrouillage du frein de la figure 16 ;
- la figure 18 est un schéma explicatif illustrant une deuxième étape d'un processus de serrage c'est-à-dire de blocage et/ou de verrouillage du frein de la figure 16 ;
- la figure 19 est un schéma explicatif illustrant une troisième étape d'un processus de serrage c'est-à-dire de blocage et/ou de verrouillage du frein de la figure 16 ;
- la figure 20 est un schéma explicatif illustrant une première étape d'un processus de déblocage et/ou de déverrouillage du frein de la figure 16 ;
- la figure 21 est un schéma explicatif illustrant une deuxième étape d'un processus de déblocage et/ou de déverrouillage du frein de la figure 16 ;
- la figure 22 est un schéma explicatif illustrant une troisième étape d'un processus de déblocage et/ou de déverrouillage du frein de la figure 16 ;

Dans la description des figures qui va suivre, des chiffres de références identiques désignent des pièces identiques ou ayant de fonctions similaires.

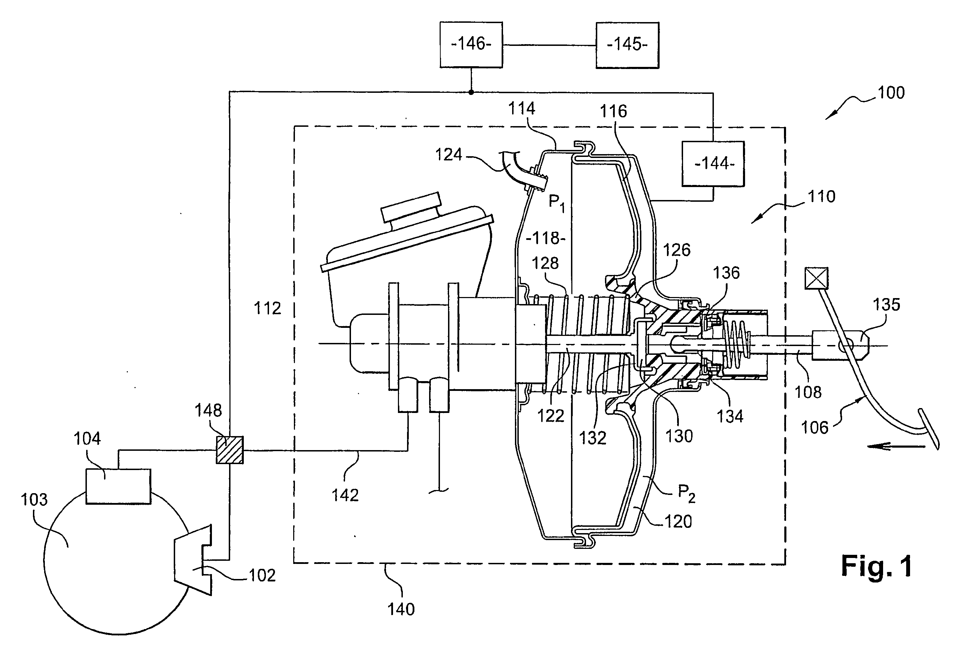

On a représenté à la figure 1, un circuit simplifié de freinage 100 susceptible d'être mis en oeuvre pour réaliser la fonction de freinage d'au moins une roue d'un véhicule automobile.

Un tel circuit de freinage 100 comporte au moins un frein principal 102, dit frein de service ou actif, et un frein de parking 104.

Le frein principal de service 102 est actionné par un dispositif d'actionnement hydraulique 140 conventionnel qui est fonction du type de mécanisme de frein utilisé, à savoir un mécanisme du type frein à disque ou du type frein à tambour.

Le dispositif d'actionnement hydraulique 140 du frein actif ou principal de service 102 comporte un organe de commande 106 du frein actif 102 qui est constitué de manière conventionnelle par une pédale de frein qui est susceptible d'être actionnée par le pied du conducteur du véhicule selon un effort de commande déterminé pour l'application d'un effort de freinage actif.

De manière connue, la pédale de frein 106 agit sur une tige de commande 108 d'un servomoteur 110 pneumatique d'assistance au freinage qui est destiné à actionner un maître cylindre 112 de freinage du véhicule automobile.

Un tel servomoteur 110 pneumatique d'assistance au freinage associé à un maître cylindre 112 et leur fonctionnement sont rappelés dans la description qui va suivre.

Le servomoteur pneumatique 110 comporte une enveloppe rigide 114 à l'intérieur de laquelle est montée mobile une cloison 116 transversale qui délimite de façon étanche une chambre avant 118, soumise à une première pression "P₁", et une chambre arrière 120 soumise à une deuxième pression "P₂". La deuxième pression "P₂" est susceptible de varier entre la valeur de la pression "P₁" et la valeur d'une pression "Pₐ" supérieure à la pression "P₁" pour provoquer les déplacements de la cloison 116, qui est susceptible de solliciter, comme on le verra ultérieurement une tige 122 d'actionnement du maître-cylindre 13.

Plus particulièrement, la pression "P₁" correspond notamment à une pression fournie par une source de dépression du véhicule. Dans le cas d'un moteur à allumage commandé, la pression de dépression "P₁" est par exemple fournie par un collecteur d'admission du moteur du véhicule et, dans le cas d'un moteur à allumage par compression de type "diesel", la pression de dépression "P₁" est par exemple fournie par une pompe à vide du véhicule.

La chambre avant 118 est reliée à la source de dépression du véhicule par l'intermédiaire d'un conduit 124 de dépression qui débouche dans l'enveloppe 114.

Le servomoteur pneumatique 110 comporte un piston mobile 126 axialement qui est solidaire, par exemple par emboîtement, de la cloison mobile 116.

A l'intérieur de l'enveloppe 114, la cloison mobile 116 est rappelée élastiquement vers l'arrière par des premiers moyens de rappel constitués d'un ressort 128 de rappel qui prend appui sur l'enveloppe 114 et sur une face avant du piston mobile 126.

La face avant du piston mobile 126 comporte une portée cylindrique avant, qui est agencée en regard d'un disque 130 de réaction qui est logé dans une coupelle 132 solidaire de la tige 122 d'actionnement du maître-cylindre 112.

La tige de commande 108 qui est reliée à une pédale de frein 106 du véhicule par l'intermédiaire d'un manchon 135 d'accouplement, est susceptible de se déplacer dans l'enveloppe 114, et plus particulièrement dans le piston mobile 126, sélectivement en fonction de l'effort de commande déterminé exercé par le conducteur sur la pédale 106 pour l'application d'un effort de freinage actif par le frein principal de service 102.

Les mouvements de la tige de commande 108 sont susceptibles de déterminer les ouvertures et fermetures d'au moins un clapet 134 axial dit "d'admission" qui est interposé entre une source de pression soumise à la pression "Pₐ" supérieure à la première pression "P₁" et la chambre 120 arrière, et d'au moins un clapet 136 axial dit "de rééquilibrage" qui est interposé entre la chambre 118 avant et la chambre 120 arrière, pour actionner la cloison mobile précédemment décrite.

Dans le cas d'un freinage actif, la source de pression soumise à la pression "Pₐ" correspond usuellement au milieu atmosphérique ambiant. A cet effet, le clapet 134 débouche directement dans une extrémité arrière du corps du piston 126 formant un conduit axial qui est ouvert à l'air libre.

De manière conventionnelle, le clapet 136 de rééquilibrage et le clapet 134 d'admission font partie d'un clapet unique à trois voies

L'ensemble constitué par le servomoteur pneumatique d'assistance 110 et le maître cylindre 112 constitue une source de pression 140 destinée à alimenter en fluide sous pression le dispositif d'actionnement hydraulique du frein principal de service 102.

Lorsque le conducteur exerce un effort de commande déterminé sur la pédale 106, le servomoteur 110 pneumatique d'assistance permet d'amplifier cet effort qui est ensuite transmis par la tige d'actionnement 122 au maître cylindre 112, généralement à un piston, dit primaire (non représenté), du maître cylindre 112 de manière à établir dans le circuit de freinage 100 une pression hydraulique suffisante d'actionnement du frein actif.

Plus précisément, le maître cylindre 112 est raccordé par une canalisation 142 au frein principal de service 102 de telle sorte que la pression hydraulique d'actionnement, en alimentant le dispositif d'actionnement hydraulique du frein 102, provoque de manière connue l'application d'un effort de freinage, c'est à dire le serrage d'un organe tournant 103, tel qu'un disque ou un tambour, par des moyens d'immobilisation du frein.

Selon l'invention, le frein de parking 104 qui comporte des moyens de blocage (non représenté) à activation par un fluide sous pression et susceptibles d'être verrouillés mécaniquement, est alimenté en fluide sous pression par une source de pression 140 comportant le maître cylindre 112 de freinage associé au servomoteur pneumatique 110 d'assistance du frein principal de service 102.

L'ensemble formé par le servomoteur 110 pneumatique d'assistance et le maître cylindre de freinage 112 constitue donc la source de liquide de frein sous pression pour l'actionnement d'une part du frein principal de service 102 et, conformément à l'invention, d'autre part pour l'actionnement du frein de parking 104.

Le circuit de freinage 100 comporte un dispositif de commande du frein parking 104 comportant notamment une commande 144 d'activation du frein 104.

La commande d'activation 144 du frein de parking 104 est avantageusement indépendante de la commande du frein principal de service ou actif 102 constituée par la pédale 106.

La commande d'activation 144 et de préférence commandée par un calculateur 146 qui pilote aussi l'amenée du liquide de frein sous pression au frein de parking 104.

Ainsi, l'application d'un effort de freinage de parking est de préférence réalisée selon le fonctionnement suivant.

Le conducteur actionne tout d'abord un organe 145 de commande d'activation de frein de parking, par exemple en appuyant sur une touche ou un commutateur placé dans l'habitacle.

Le calculateur 146 du système de freinage reçoit alors un signal de commande et vérifie avantageusement que les consignes du conducteur correspondent à des conditions satisfaisantes de sécurité.

Si ces conditions de sécurité sont satisfaites, le calculateur 146 qui a détecté le changement d'état de l'organe de commande 145 du frein de parking 104, active alors la commande d'activation 144 du frein de parking de manière à provoquer la mise sous pression liquide de frein.

La commande d'activation 144 est par exemple constituée par une électrovanne qui permet de mettre la chambre arrière 120 du servomoteur pneumatique 110 en communication avec une source de pression de manière à établir dans la chambre arrière 120 une deuxième pression "P₂" correspondant à une haute pression "Pₐ" supérieure à la première pression "P₁" de la chambre avant 118.

La pression "Pₐ" est de préférence constituée par la pression atmosphérique, en variante la haute pression "Pₐ" est générée par des moyens tels qu'une pompe ou un accumulateur auxquels est raccordée la vanne électrique.

L'établissement de la pression "Pₐ" dans la chambre arrière 120 provoque le déplacement de cloison 116 et l'ouverture du clapet d'admission 134.

De manière conventionnelle, le déplacement de la cloison 116 provoque le déplacement axialement vers l'avant de la tige d'actionnement 122 qui sollicite le piston primaire du maître cylindre 112.

De manière analogue au fonctionnement décrit précédemment pour le frein principal de service 102, le piston du maître cylindre 112 provoque l'établissement dans le circuit de freinage d'une pression hydraulique d'actionnement.

Dans le mode de réalisation illustré à la figure 1, le frein principal de service 102 et le frein de parking 104 sont des composants distincts et raccordés à la canalisation 142 pour leur alimentation en liquide de frein sous pression.

Ainsi, le dispositif de commande d'activation du frein de parking 104 comporte avantageusement des moyens tels qu'une électrovanne 148 qui est pilotée par le calculateur 146 de freinage de manière à alimenter sélectivement en liquide de frein sous pression le frein de parking 104 ou le frein actif 102.

Le calculateur 146 constitue un moyen de pilotage de l'amenée du liquide de frein sous pression au frein de parking 104 et il pilote l'électrovanne 148 de manière à amener le liquide de frein sous pression générée par le servomoteur 110 et le maître cylindre 112 au frein de parking 104.

Lorsque le frein de parking 104 est en position de freinage, c'est-à-dire lorsque les moyens d'immobilisation (non représentés) qu'il comporte exercent sur l'organe tournant 103 un effort de freinage de parking, le calculateur provoque alors, de manière connue, le verrouillage mécanique des moyens d'immobilisation.

Le frein de parking 104 est alors verrouillé en position de freinage pour une durée indéterminée, plus précisément jusqu'à ce que le conducteur actionne de nouveau l'organe 145 de commande pour provoquer le déverrouillage du frein 104 dont les moyens d'immobilisation sont avantageusement rappelés élastiquement vers la position de repos du frein de parking 104.

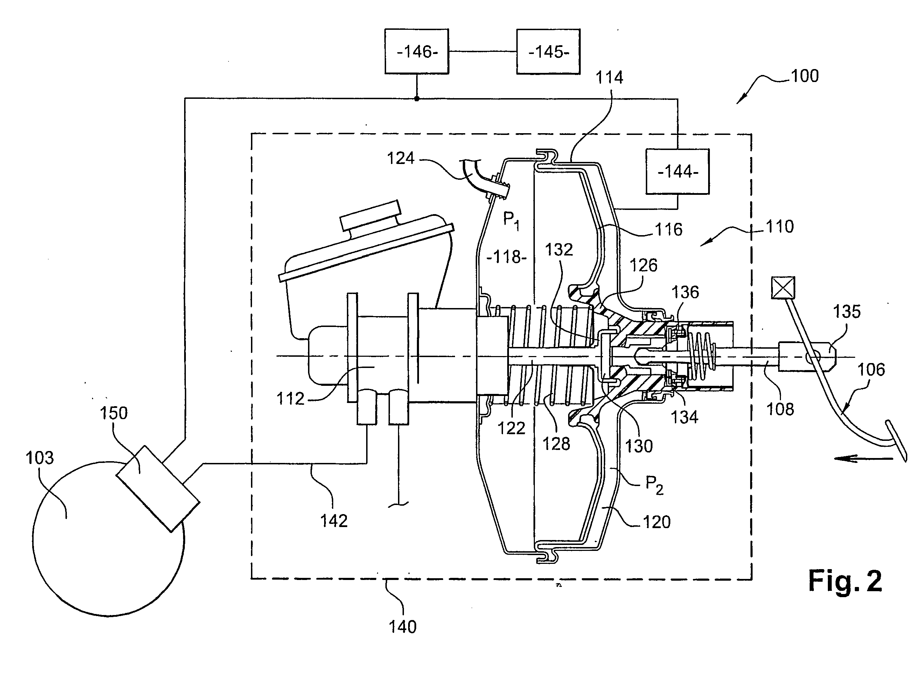

Par comparaison avec la figure 1, dans la variante de réalisation illustrée à la figure 2, les fonctions de frein principal de service ou actif et de frein de parking sont assurées par un mécanisme unique de frein 150.

Comme on le verra maintenant il n'est plus nécessaire de prévoir d'électrovanne 148.

On a représenté sur les figures suivantes, des exemples de réalisation préférés d'un tel frein unique de service et de parking 150 susceptible d'être activé hydrauliquement par du liquide de frein sous haute pression conformément à l'invention.

Dans cet exemple le frein 150 correspond à un frein à disque à étrier 1 flottant assurant donc également la fonction de frein principal de service.

Dans l'exemple de réalisation illustré, on a représenté pour simplifier un frein arrière étant bien entendu qu'en variante la mise en oeuvre d'un frein de parking sur des roues avant et/ou d'un frein de parking séparé du frein principal de service comme illustré à la figure 1 ne sort pas du cadre de la présente invention.

L'étrier 1 est muni d'un alésage borgne 3 formant cylindre hydraulique d'un piston 5 muni d'un dispositif 7 de rattrapage d'usure de patins de frein comportant, de manière connue, un écrou 9 et une vis 11 se dévissant par rapport à l'écrou 9 au fur et à mesure de l'usure de patins de frein. Une partie arrière 13 de l'étrier 1 comporte un logement d'une clavette 15 de blocage mécanique, direct ou, indirect.

Dans l'exemple représenté, le blocage s'effectue par l'intermédiaire du dispositif 7 de rattrapage de l'usure des patins, du piston 5 dans une première condition dans laquelle les patins (non représentés) sont fermement appliqués sur le disque (également non représenté).

On entend par application ferme, une application permettant d'immobiliser les véhicules, notamment sur une pente. On considère couramment qu'une telle application correspond à une force de 10.000 N à 20.000 N.

Dans une deuxième condition, la clavette 15 ne s'oppose pas au recul du piston 5. Dans l'exemple illustré, la clavette 15 est montée à translation selon un axe Y perpendiculaire à l'axe X du piston hydraulique 5. La clavette 15 comporte une première zone 17 d'appui de la face arrière 19 de l'écrou 9 et une deuxième zone d'appui 21, décalée selon l'axe Y par rapport à la zone 17 et présentant une extension vers l'avant, selon l'axe X, en direction du piston hydraulique 5 supérieur à l'extension selon l'axe X, dans cette même direction, de la zone 17.

Dans l'exemple de réalisation illustré, l'écrou 9 est sensiblement cylindrique d'axe X, la face arrière 19 comporte deux zones espacées selon l'axe Y susceptibles d'entrer en contact avec la clavette 15. Cette dernière comporte une première première zone 17 suivie par une première deuxième zone 21 suivie par une deuxième première zone 17 suivie par une deuxième deuxième zone 21.

Avantageusement, la ou les zones 21 présentent une pente douce formant une rampe dont l'orientation facilite le déplacement de la clavette 15 au contact éventuel de la face arrière 19, selon la flèche 23. Dans l'exemple illustré, l'extension selon l'axe X des zones 21 augmente de gauche vers la droite.

Le frein 1 selon ce mode de réalisation comporte un actionneur permettant de déplacer, sur commande, par exemple lorsque le conducteur appuie sur une touche, un levier, une pédale ou analogue, situé dans l'habitacle, la clavette 15 selon l'axe Y, dans le sens de la flèche 23. Ce déplacement assurant le blocage de frein de parking peut également être commandé par un calculateur, par exemple lorsque le moteur thermique du véhicule a été stoppé et/ou lorsque le conducteur a quitté le véhicule. Par contre, il est avantageux d'utiliser uniquement le freinage hydraulique sans blocage mécanique du piston lors de l'arrêt au feu rouge ou lors de démarrage en côte (Hill Holder en terminologie anglo-saxonne).

Dans l'exemple illustré, l'actionnement de la clavette 15 est hydraulique par l'intermédiaire d'une vanne 25, de type fermé au repos reliant, sur commande 27, une chambre de pression 29 située à une première extrémité axiale de la clavette 15 à la pression régnant dans le cylindre 3. La vanne 25 est disposée au niveau de l'unité hydraulique du système ou circuit de freinage du véhicule ou avantageusement, au niveau de l'étrier 4.

Dans l'exemple illustré, une chambre 29 est définie par un piston auxiliaire 31 mobile selon l'axe Y et repoussée axialement selon la flèche 23 par un ressort 33 et par la face de la clavette 15, disposée en vis à vis du piston auxiliaire 31. La clavette 15 forme un piston hydraulique et est repoussée axialement selon l'axe Y dans la direction opposée à la flèche 23 par un ressort 35 exerçant une force supérieure à celle exercée par le ressort 33.

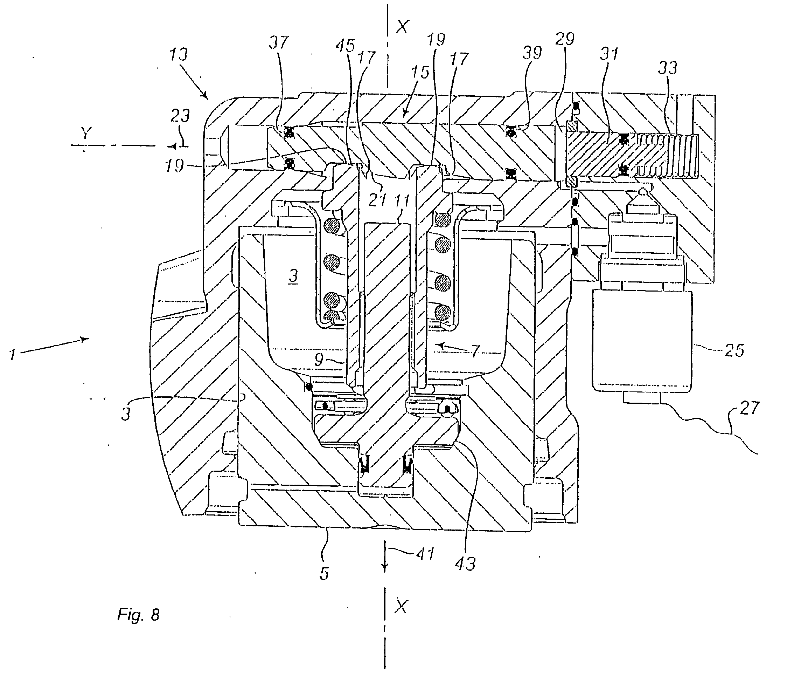

En variante, comme illustré sur la figure 8, le ressort 35 est remplacé par une clavette 15 étagée, le diamètre d'application de la pression sur ses deux extrémités axiales étant différent. La clavette 15 comporte des joints 37 par exemple des joints toriques en élastomère permettant d'isoler la chambre 29 par rapport au cylindre 3 et au logement du ressort 35. Le piston 31 comporte un joint 39 permettant d'isoler la chambre 29 par rapport à la pression régnant dans le logement du ressort 33.

Les ressorts 33 et 35 se trouvent dans des logements isolés du liquide de frein et par exemple remplis avec de l'air. Ces logements peuvent être reliés à l'atmosphère par des canaux non représentés.

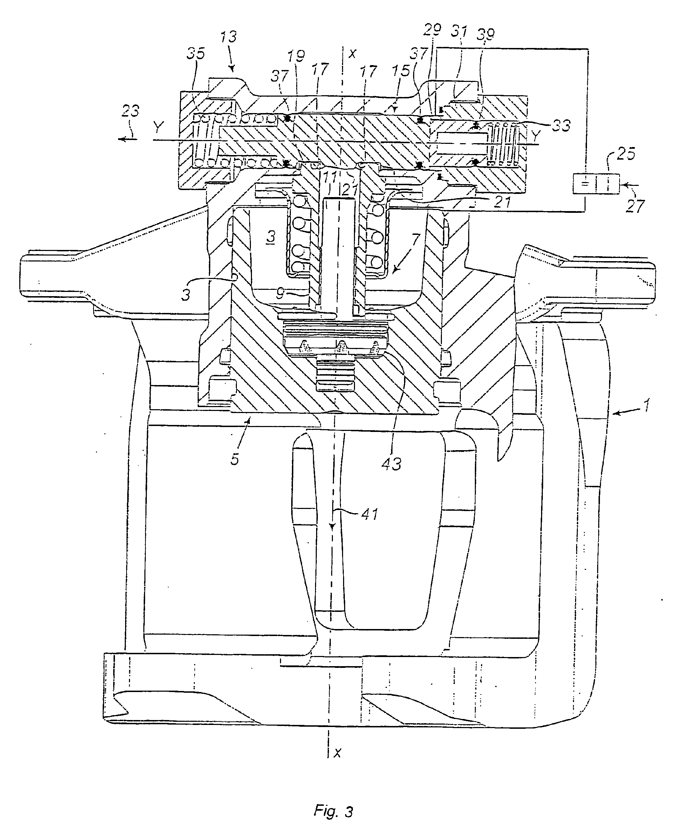

Le fonctionnement de l'exemple de réalisation du frein de parking des figures 3 à 8 sera expliqué ci-après.

Le conducteur actionne la commande d'activation de frein de parking, par exemple en appuyant sur une touche ou un commutateur placé dans l'habitacle. Avantageusement, un calculateur non représenté, par exemple le calculateur du système de freinage, vérifie que les consignes du conducteur correspondent à des conditions de sécurité satisfaisantes.

Par exemple, si la vitesse du véhicule est supérieure à 5km/h, l'ordre de serrer le frein de parking n'est pas directement exécuté mais le conducteur est averti de l'anomalie par un signal lumineux et/ou sonore. Le calculateur détecte le changement d'état de la touche de commande du frein de parking et contrôle l'amenée du liquide de frein sous haute pression, par exemple comprise entre 10⁷ Pa et 1,7 10⁷ Pa dans le cylindre 3 à partir d'une source de pression.

Conformément à l'invention, la source de pression est constituée par le servomoteur 110 pneumatique d'assistance au freinage (booster en terminologie anglo-saxonne) actif commandé par une vanne électrique, une pompe ou un accumulateur.

La différence de pression entre la haute pression du liquide de frein régnant dans le cylindre 3 et la pression atmosphérique régnant notamment au niveau de la face avant du piston 5 assure l'avancement de ce dernier selon la flèche 41, en direction du disque avec serrage de patins sur le disque assurant l'immobilisation de la roue.

Dans la mesure où au moins un train du véhicule est équipé avec les freins, on assure l'immobilisation du véhicule.

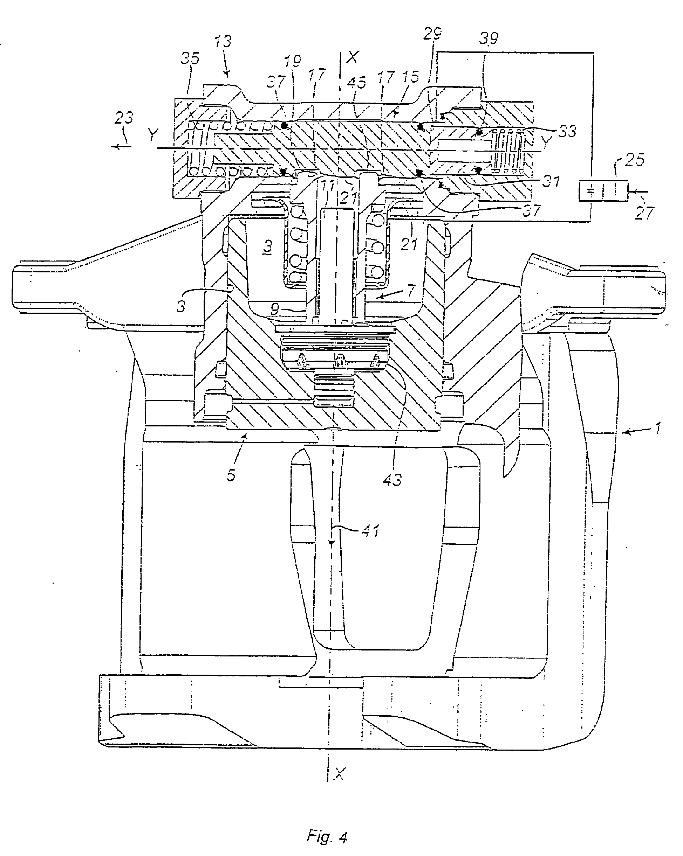

Le dispositif 7 de rattrapage de jeu avance également selon la flèche 41, comme on peut le voir sur la figure 4, de manière d'une part à éviter un surréglage par blocage en rotation de la vis 11 par application des portées coniques 43 de la vis 11 et du piston 5 et, d'autre part, à ménager un espace 45 entre la face arrière 19 de l'écrou 9 et la première zone de contact 17 de la clavette 15.

Dans l'exemple illustré sur la figure 4, l'espace 45 a une épaisseur inférieure à la différence entre l'extension selon l'axe X de la deuxième zone 21 et de la première zone 17 de la clavette 15. Toutefois, il est bien entendu que la mise en oeuvre d'un espace 45 supérieure à cette différence d'extension selon l'axe X ne sort pas du cadre de la présente invention.

En effet, l'épaisseur de l'espace 45 facilite le déplacement de la clavette 15 selon la flèche 23.

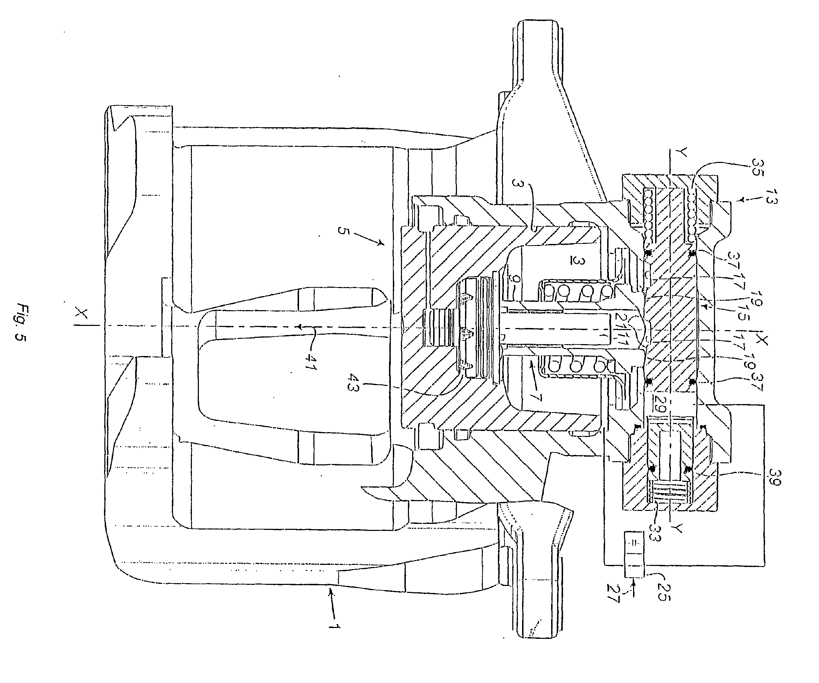

Le calculateur, génère le signal 27 (figure 5) de commande d'ouverture de la vanne 25, mettant en communication le cylindre 3 avec la chambre 29. La pression dans la chambre 29 est à ce moment suffisante pour vaincre la force opposée par le ressort 35 et déplace la clavette 15 selon la flèche 23 tel qu'illustré sur la figure 5.

Les deuxièmes zones d'appui 21 de la clavette 15 se trouvent donc en vis à vis de la face arrière de l'écrou 9. Un relâchement de la pression dans le cylindre permet le recul du piston. Le calculateur commande la baisse de pression régnant dans le cylindre 3 provoquant une application ferme des faces arrière 19 de l'écrou 9 sur la deuxième zone d'appui 21 de la clavette 15. Simultanément, le liquide de frein s'écoule de la chambre 29 vers le cylindre 3 par l'intermédiaire de la vanne 25, sous l'action du piston auxiliaire 31 entraîné par le ressort 33 selon la flèche 23.

L'appui ferme assure le blocage en translation de la clavette 15. Il en résulte que la clavette 15 et le piston 5 (par l'intermédiaire du dispositif 7) se bloquent et/ou se verrouillent mutuellement empêchant la translation de la clavette malgré une baisse significative de la pression dans la chambre 29. Le frein de parking est donc appliqué dans une condition parfaitement stable même en l'absence d'alimentation hydraulique, électrique ou autre.

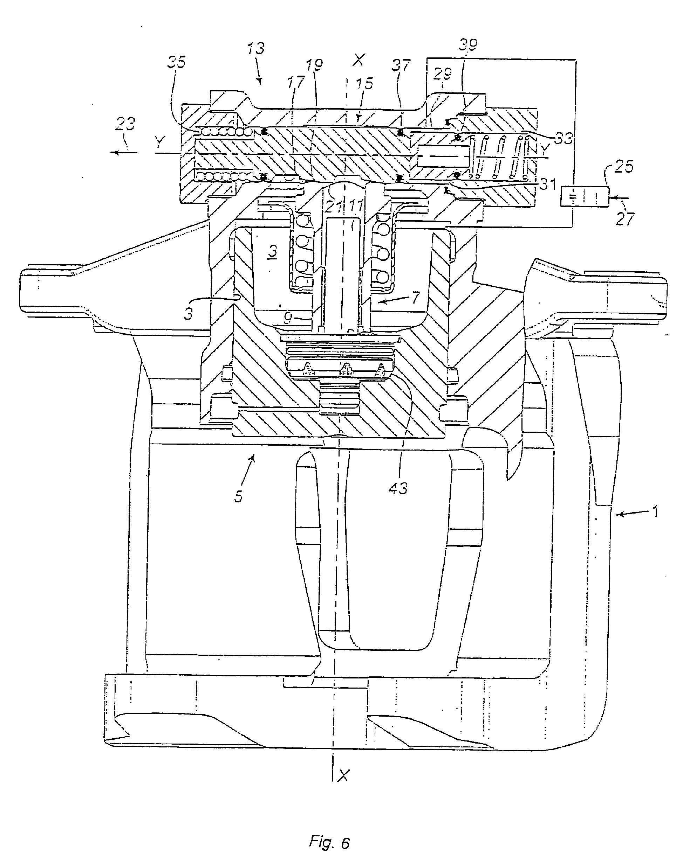

Le calculateur assure alors la fermeture de la vanne 25 isolant la chambre 29 du cylindre 3 comme illustré sur la figure 6.

II est à noter que l'application de la haute pression dans le cylindre 3 assure une déformation élastique de l'étrier 1, appelée ouverture de l'étrier, qui stocke une énergie élastique considérable assurant le maintien du freinage de parking. La quantité d'énergie stockée peut être optimisée par un dessin particulier de l'étrier ou le choix de matériaux mis en oeuvre favorisant cette déformation lorsqu'il est soumis à des contraintes importantes imposées par la haute pression du fluide hydraulique. Par exemple, on met en oeuvre un étrier en fonte, en acier, en matériau composite ou un étrier en aluminium ou en fonte avec des inserts en acier. De même, cette énergie peut être stockée dans des éléments élastiques externes à l'étrier, par exemple pour améliorer la tenue du frein de parking lors de refroidissement d'un frein appliqué à haute température.

En variante, le système ou circuit de freinage comporte des moyens de mesures de la force de serrage du frein de parking et assure une augmentation de cette force par les cycles précédemment expliqués lorsque cela est nécessaire, par exemple par suite de refroidissement d'un frein appliqué à chaud après des freinages de service importants.

Il est bien entendu que l'exemple de réalisation n'est pas limité à la formation d'un espace 45 entre la face 19 de l'écrou 9 et la clavette 15. Il est parfaitement possible sans sortir du cadre de la présente invention d'appliquer directement les freins de parking en déplaçant la clavette 15 selon la flèche 23.

La désactivation du frein de parking s'effectue de préférence selon les étapes suivantes :

La vanne 25 est fermée en permanence. Dans un premier temps, on applique une pression supérieure à celle qui a été utilisée pour assurer le verrouillage du frein de parking, par exemple comprise entre 1,1 x 107 Pa et 2 x 107 Pa.

Le piston 5 ainsi que le dispositif 7 de rattrapage de jeu avance selon la flèche 41 formant un espace 45. En absence de pression dans la chambre 29, le ressort 35 ramène les zones 17 en vis à vis des faces 19 de l'écrou 9 (translation de la clavette 15 dans le sens opposé à la flèche 23). La pression régnant dans le cylindre 3 est diminuée et le frein de parking est relâché.

Il est bien entendu que le mode de réalisation n'est pas limité à la mise en oeuvre d'une vanne 25 unique et d'une chambre de pression 29 unique.

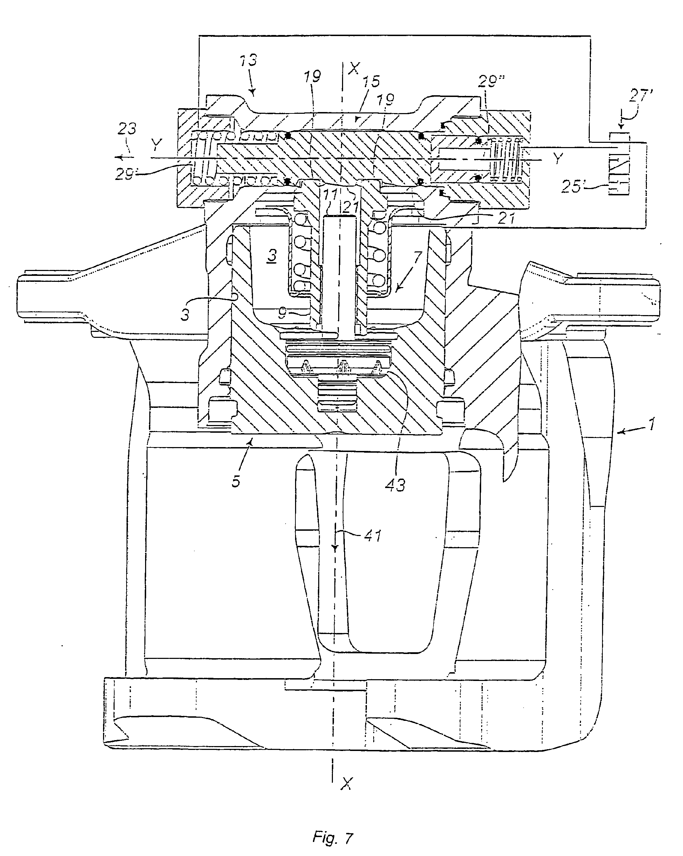

Au contraire, comme par exemple illustré sur la figure 7, on peut utiliser une vanne 25' double alimentant, sur commande 27', une première chambre 29' située à gauche de la figure 7 permettant de desserrer le frein de parking ou une deuxième chambre 29" située à droite de la figure permettant de serrer le frein de parking, à une source de haute pression, directement ou indirectement, par l'intermédiaire du cylindre 3.

Dans l'exemple illustré, la vanne 25' comporte trois positions : une première position dans laquelle le cylindre 3 et les deux chambres sont isolés, une deuxième position dans laquelle la chambre 29' est alimentée alors que la chambre 29" est isolée et une troisième position dans laquelle la chambre 29" est alimentée et la chambre 29' est isolée. Il est bien entendu que la vanne trois voies unique 25' peut être remplacée par deux vannes à deux voies, chacune comandant l'alimentation d'une des deux chambres 29' ou 29".

Le frein de parking peut être associé ou combiné à un frein de secours sans sortir du cadre de la présente invention.

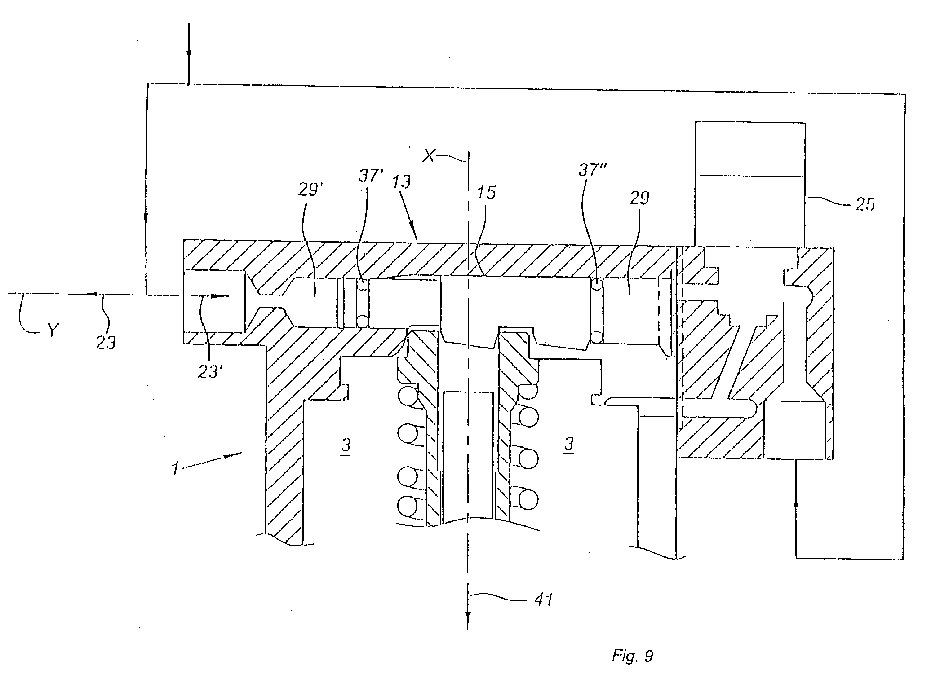

Il est bien entendu que le frein n'est pas limité à la mise en oeuvre de vanne fermée au repos. Avantageusement, comme illustré sur la figure 9 on met en oeuvre une vanne 25 ouverte au repos reliant le cylindre 3 à la chambre 29. Par ailleurs, la chambre 29 et une chambre 29', disposées en vis-à-vis aux deux extrémités axiales (d'axe Y) de la clavette 15 sont reliées conformément à l'invention à la source de haute pression d'alimentation du frein, typiquement un maître-cylindre 112 associé au servomoteur 110.

Le frein de la figure 9 comporte une clavette 15 étagée comportant un premier joint d'étanchéité 37' entre la chambre 29' et le cylindre 3 d'un premier diamètre D1 et un deuxième joint 37" d'étanchéité entre la chambre 29 et le cylindre 3 d'un deuxième diamètre D2 différent du premier diamètre D1. Par exemple, D2 est supérieur à D1.

Les joints 37' et 37" sont avantageusement des joints toriques par exemple en élastomère chacun disposé dans une gorge par exemple à section carrée. Les joints 37' et 37" définissent la surface d'application de la pression régnant dans la chambre hydraulique 29' respectivement 29 sur la clavette 15.

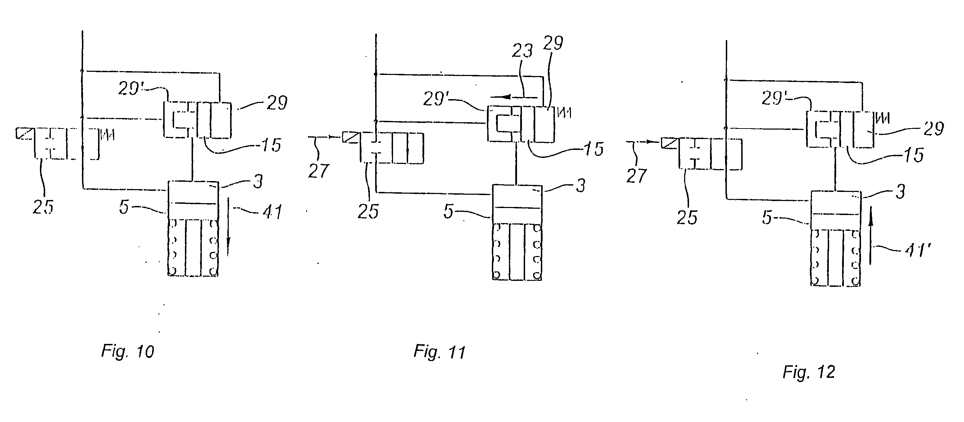

Le fonctionnement de l'exemple préféré de réalisation du frein de parking selon la présente invention, illustré sur la figure 9, sera expliqué ci-après de préférence aux figures 10 à 15.

Le conducteur actionne la commande d'activation de frein de parking, par exemple en appuyant sur une touche ou un commutateur placé dans l'habitacle. Avantageusement, un calculateur 146, par exemple le calculateur du système de freinage, vérifie que les consignes du conducteur correspondent à des conditions de sécurité satisfaisantes.

Par exemple, si la vitesse du véhicule est supérieure à 5km/h, l'ordre de serrer le frein de parking n'est pas directement exécuté mais le conducteur est averti de l'anomalie par un signal lumineux et/ou sonore.

Le calculateur détecte le changement d'état de la touche de commande du frein de parking et contrôle l'amenée du liquide de frein sous haute pression, par exemple comprise entre 10⁷ Pa et 1,7 10⁷ Pa dans le cylindre 3 et les chambres 29 et 29' à partir d'une source de pression 140 qui, conformément à l'invention, est constituée par le servomoteur 110 pneumatique d'assistance au freinage (booster en terminologie anglo-saxonne) actif commandé par une vanne électrique, une pompe ou un accumulateur.

La différence de pression entre la haute pression du liquide de frein régnant dans le cylindre 3 et la pression atmosphérique régnant notamment au niveau de la face avant du piston 5 assure l'avancement de ce dernier selon la flèche 41, en direction du disque avec serrage de patins sur le disque assurant l'immobilisation de la roue.

Dans la mesure où au moins un train du véhicule est avantageusement équipé avec des freins 1, on assure l'immobilisation du véhicule.

Le dispositif 7 de rattrapage de jeu avance également selon la flèche 41 de manière d'une part à éviter un surréglage par blocage en rotation de la vis 11 par application des portées coniques 43 de la vis 11 et du piston 5 et d'autre part, à ménager un espace 45 entre la face arrière 19 de l'écrou 9 et la première zone de contact 17 de la clavette 15.

Comme illustré sur la figure 10, la pression est appliquée simultanément au cylindre 3 assurant l'avancement du piston selon la flèche 41, à la partie centrale de la clavette 15 située entre les joints 37' et 37", et aux chambres 29 et 29'.

Comme illustré sur la figure 11, le calculateur génère un signal 27 de fermeture de la vanne 25 ainsi que la génération d'une deuxième pression supérieure à la pression précédemment appliquée. La vanne 25 étant fermée, cette pression n'est appliquée qu'aux chambres 29 et 29'. Dans la mesure où le joint 37" a un diamètre D2 supérieur au diamètre D1 du joint 37', la clavette 15 se déplace selon la flèche 23 vers la gauche de la figure 9 de manière à ce que les deuxième zones d'appui 21 soient disposées en vis-à-vis de la face arrière 19 de l'écrou 9.

Comme on peut le voir sur la figure 12, le calculateur assure la génération d'un signal 27 d'ouverture de la vanne 25 et de baisse de pression assurant le recul du piston 5 selon une flèche 41' de sens opposé à celui de la flèche 41 avec appui de la face arrière 19 de l'écrou 9 sur les zones d'appui 21 de la clavette 15 assurant le blocage du frein en position dans laquelle les patins sont appliqués fermement sur le disque assurant l'immobilisation permanente du véhicule.

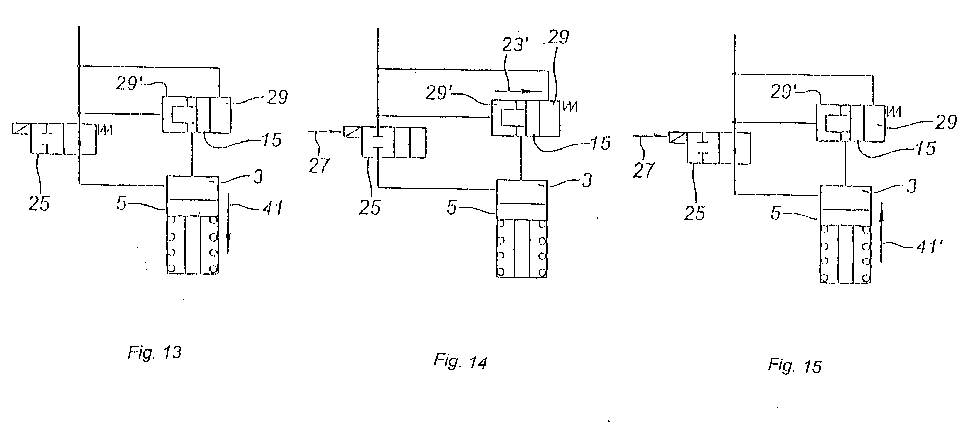

La libération du frein de parking de la figure 9 est illustrée sur les figures 13 à 15.

Tout d'abord, comme illustré sur la figure 13, la vanne 25 étant ouverte, le calculateur assure l'application d'une pression au cylindre 3, à la zone centrale de la clavette 15 ainsi qu'aux chambres 29 et 29'. Cette pression assure l'avancement du piston 5 selon flèche 41 dégageant un espace 45 entre la face arrière 19 de la vis 9 et la clavette 15.

Ensuite, comme illustré sur la figure 14, le calculateur élabore un signal 27 de fermeture de la vanne 25 et la baisse de pression appliquée par la source de pression. La pression résiduelle emprisonnée au niveau de la zone centrale de la clavette 15 s'appliquant sur le joint 37" assure le déplacement de la clavette 15 vers la droite de la figure 12 selon une flèche 23' dont le sens est opposé à celui de la flèche 23.

Enfin, le calculateur génère un signal 27 d'ouverture de la vanne 25 et assurant le relâché de pression et le recul du piston 5 selon la flèche 41' de sens opposé à celui de la flèche 41. Toutefois, la clavette 15 se trouvant dans une position dans laquelle les zones d'appui 17 se trouvent en vis-à-vis de la face arrière 19 de l'écrou 9 et, par suite le frein de parking est relâché.

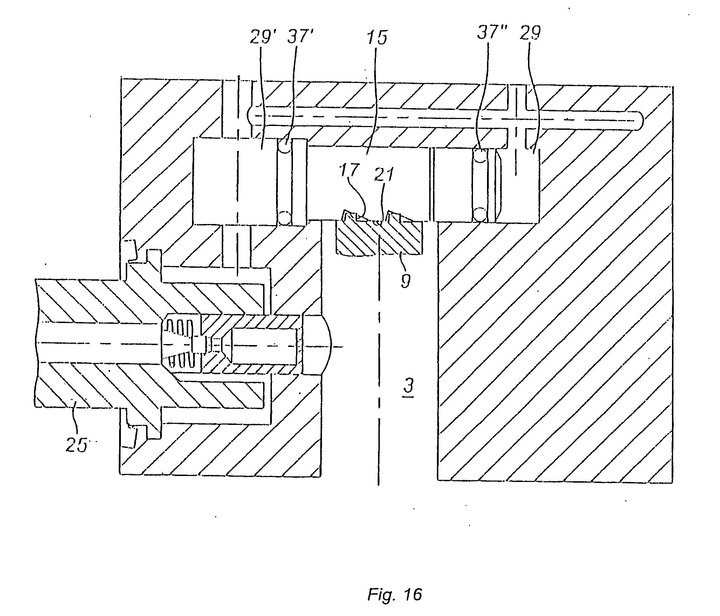

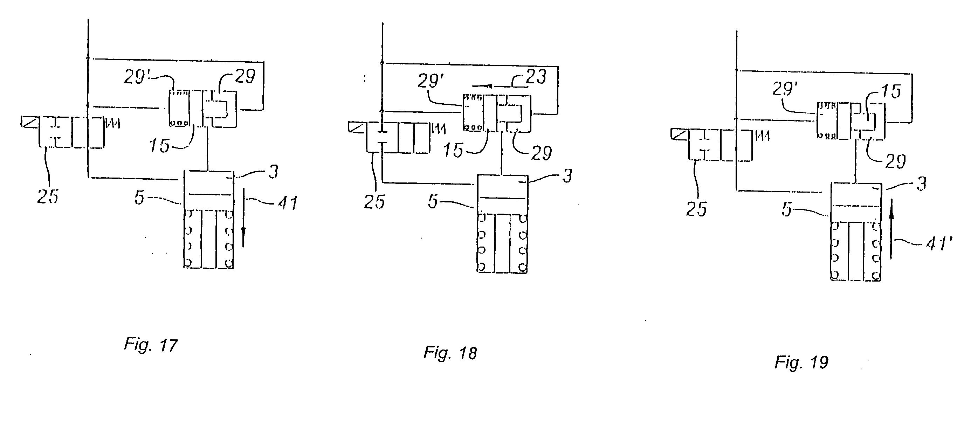

La variante de réalisation du frein 1 illustrée sur la figure 16 diffère principalement de celle illustrée sur la figure 9 en ce que le diamètre D1 du joint 37' est supérieur au diamètre D2 du joint 37". Le cycle de serrage, c'est-à-dire verrouillage et/ou blocage du frein résultant est illustré sur les figures 17 à 19.

Le calculateur génère un signal de commande d'augmentation de pression en vue du verrouillage du frein de parking.

Comme illustré sur la figure 17, la pression est appliquée simultanément au cylindre 3 assurant l'avancement du piston selon la flèche 41, à la partie centrale de la clavette 15 située entre les joints 37' et 37", et aux chambres 29 et 29'.

Comme illustré sur la figure 18, le calculateur génère un signal 27 de fermeture de la vanne 25 ainsi que la consigne pour diminuer la pression précédemment appliquée. La vanne 25 étant fermée, la diminution de pression ne concerne que les chambres 29 et 29'.

La vanne 25 étant fermée, la pression régnant dans la partie centrale de la clavette 15 située entre les joints 37' et 37" assure le déplacement de la clavette 15 selon la flèche 23, vers la gauche de la figure 18 de manière à ce que les deuxième zones d'appui 21 soient disposées en vis-à-vis de la face arrière 19 de l'écrou 9.

Comme on peut le voir sur la figure 19, le calculateur assure la génération d'un signal 27 d'ouverture de la vanne 25 et de baisse de pression régnant dans le cylindre 3 assurant le recul du piston 5 selon une flèche 41' de sens opposé à celui de la flèche 41 avec appui de la face arrière 19 de l'écrou 9 sur les zones d'appui 21 de la clavette 15 assurant le blocage du frein en position dans laquelle les patins sont appliqués fermement sur le disque assurant l'immobilisation permanente du véhicule.

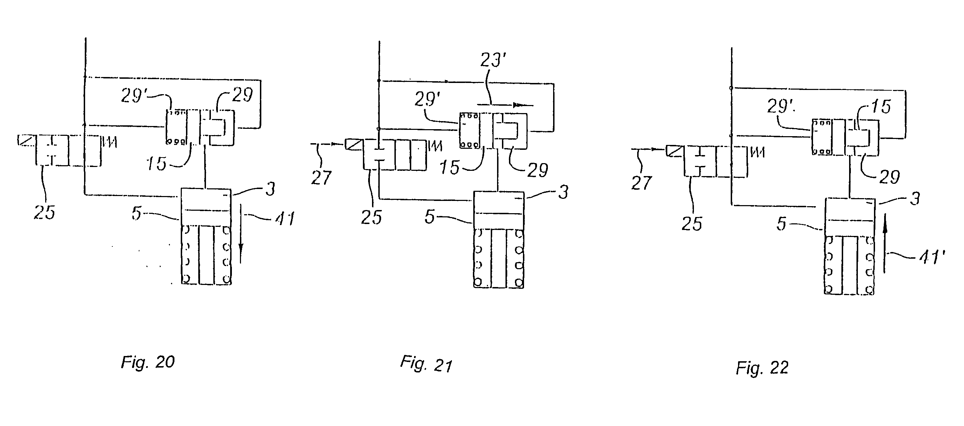

La libération du frein de parking de la figure 16 est illustrée sur les figures 20 à 22.

Tout d'abord, comme illustré sur la figure 20, la vanne 25 étant ouverte, le calculateur assure l'application d'une pression au cylindre 3, à la zone centrale de la clavette 15 ainsi qu'aux chambres 29 et 29'. Cette pression assure l'avancement du piston 5 selon flèche 41 dégageant un espace 45 entre la face arrière 19 de la vis 9 et la clavette 15.

Ensuite, comme illustré sur la figure 21, le calculateur élabore un signal 27 de fermeture de la vanne 25 et la génération d'une deuxième pression supérieure à la pression précédemment appliquée conformément à l'invention par la source de pression 140. Cette deuxième pression n'est appliquée qu'aux chambres 29 et 29'. Dans la mesure où le joint 37' a un diamètre D1 supérieur au diamètre D2 du joint 37", la clavette se déplace selon la flèche 23' de sens opposé à la flèche 23, vers la droite de la figure 21 de manière à ce que les zones d'appui 17 se trouvent en vis-à-vis de la face arrière 19 de la vis 9.

Enfin, comme illustré sur la figure 22, le calculateur assure le relâchement de la pression et génère un signal 27 d'ouverture de la vanne 25 entraînant le recul du piston 5 selon la flèche 41' de sens opposé à celui de la flèche 41.

Avantageusement, chaque roue d'un train avant et/ou arrière d'un véhicule est muni d'un frein.

L'équipement de quatre roues avec des freins selon le mode de réalisation préféré est particulièrement avantageux dans le cas de véhicules à quatre roues motrices, notamment des véhicules utilitaires sportifs (SUV en terminologie anglosaxone).

Le circuit de freinage et le frein de parking selon la présente invention s'appliquent notamment à l'industrie automobile.

Le circuit de freinage et le frein de parking selon la présente invention s'applique principalement à l'industrie de freinage pour véhicules automobiles notamment véhicules de tourisme.

## Revendications

1. Circuit de freinage (100), notamment pour véhicule automobile, comportant au moins un frein principal (102), dit de service ou actif, et un frein de parking (104) du type comportant des moyens de blocage à activation par une source de fluide sous pression et des moyens de verrouillage mécanique des moyens de blocage dans une condition appliquée, **caractérisé en ce que** ladite source de fluide sous pression est une source (140) de liquide de frein sous pression pour l'actionnement du frein principal de service (102) comportant un maître cylindre (112) de freinage actionné par un servomoteur actif (1110) pneumatique d'assistance au freinage appartenant au circuit de freinage (100).

2. Circuit de freinage (100) selon la revendication 1, **caractérisé en ce qu'**il comporte une commande d'activation (144) du frein de parking (104) indépendante de la commande (106) du frein principal de service ou actif (102).

3. Circuit de freinage (100) selon la revendication 2, **caractérisé en ce que** la commande d'activation (144) du frein de parking (104) comporte un calculateur (146) pour contrôler l'amenée du liquide de frein sous pression.

4. Circuit de freinage (100) selon l'une quelconque des revendications précédentes, du type comportant un frein de parking (104, 1) à disque qui comporte un piston (5) formant un moyen hydraulique d'application d'au moins un patin formant un moyen d'immobilisation sur un disque formant un organe tournant, des moyens (142) d'amener d'un fluide sous pression suffisante pour être susceptible, sur commande, d'appliquer fermement les patins sur le disque, des moyens de blocage du piston dans une première condition dans laquelle les patins sont fermement appliqués sur le disque, **caractérisé en ce que** les moyens de blocage comportent une clavette (15) et un actionneur (25, 29, 29') de déplacement sur commande de ladite clavette (15), ledit actionneur de déplacement de la clavette (15) comporte une première chambre hydraulique (29) et une deuxième chambre hydraulique (29') opposée à la première chambre hydraulique et une vanne (25) susceptibles de relier, sur commande (27), lesdites chambres hydrauliques (29, 29') à une source de liquide de frein sous haute pression de manière à entraîner la clavette (15) entre une première position dans laquelle le piston (5) du frein est libre de reculer et une deuxième position dans laquelle la clavette (15) bloque le recul du piston (5), et **en ce que** la surface d'application sur la clavette (15) de la pression régnant dans la première chambre hydraulique (29) est différente de la surface d'application sur la clavette (15) de la pression régnant dans la deuxième chambre hydraulique (29').

5. Circuit de freinage selon la revendication 4, **caractérisé en ce que** le frein de parking comporte un moyen d'interconnexion hydraulique des deux chambres hydrauliques (29, 29') pour assurer l'égalité des pressions régnant dans ces deux chambres hydrauliques (29, 29').

6. Circuit de freinage selon l'une des revendications 4 ou 5, **caractérisé en ce qu'**une première chambre hydraulique (29) est disposée à une première extrémité axiale (d'axe Y) de la clavette (15) et **en ce que** la deuxième chambre hydraulique (29') est disposée à une deuxième extrémité axiale (d'axe Y) de la clavette (15) opposée à ladite première extrémité axiale.

7. Circuit de freinage selon l'une quelconque des revendications 4 à 6, **caractérisé en ce que** la clavette (15) est munie de moyens d'isolation hermétique typiquement des joints (37, 37', 37") assurant l'isolation hermétique entre, d'une part la première chambre hydraulique (29) et une partie centrale de la clavette (15) reliée hydrauliquement au cylindre (3) du piston de frein (5) et, d'autre part ladite partie centrale de la clavette (15) de la deuxième chambre hydraulique (29').

8. Circuit de freinage selon l'une quelconque des revendications 4 à 7, **caractérisé en ce que** la vanne (25) est une vanne à commande électrique (27) ouverte au repos.

## Claims

1. Braking circuit (100), particularly for a motor vehicle, comprising at least one main brake (102) known as the service or active brake, and a parking brake (104) of the type comprising blocking means activated by a source of pressurized fluid and means of mechanical locking of the blocking means in an applied condition, **characterized in that** said source of pressurized fluid is a source (140) of pressurized brake liquid for actuating the main service brake (102) comprising a brake master cylinder (112) actuated by an active pneumatic brake booster (110) belonging to the braking circuit (100).

2. Braking circuit (100) according to Claim 1, **characterized in that** it comprises a control (144) for activating the parking brake (104) which control is independent of the control (106) for the main service or active brake (102).

3. Braking circuit (100) according to Claim 2, **characterized in that** the control (144) for activating the parking brake (104) comprises a computer (146) for controlling the ingress of the pressurized brake liquid.

4. Braking circuit (100) according to any one of the preceding claims, of the type comprising a disk-type parking brake (104, 1) which comprises a piston (5) forming a hydraulic means of applying at least one pad, that forms an immobilizing means, to a disk that forms a rotary member, means (142) for conveying a fluid under sufficient pressure to be able, on command, to apply the pads firmly to the disk, means for locking the piston in a first condition in which the pads are firmly applied to the disk, **characterized in that** the blocking means comprise a wedge (15) and an actuator (25, 29, 29') for moving said wedge (15) on demand, said actuator for moving the wedge (15) comprises a first hydraulic chamber (29) and a second hydraulic chamber (29') at the opposite end to the first hydraulic chamber and a valve (25) able to connect said hydraulic chambers (29, 29'), on demand (27), to a source of brake fluid at high pressure so as to drive the wedge (15) between a first position in which the piston (5) of the brake is free to retreat and a second position in which the wedge (15) blocks the retreat of the piston (5), and **in that** the area on the wedge (15) over which the pressure in the first hydraulic chamber (29) is applied is different from the area on the wedge (15) over which the pressure in the second hydraulic chamber (29') is applied.

5. Braking circuit according to Claim 4, **characterized in that** the parking brake comprises a means for the hydraulic interconnection of the two hydraulic chambers (29, 29') so as to balance the pressures in these two hydraulic chambers (29, 29').

6. Braking circuit according to one of Claims 4 and 5, **characterized in that** a first hydraulic chamber (29) is arranged at a first axial end (of axis Y) of the wedge (15) and **in that** the second hydraulic chamber (29') is arranged at a second axial end (of axis Y) of the wedge (15) which is the opposite end to said first axial end.

7. Braking circuit according to any one of Claims 4 to 6, **characterized in that** the wedge (15) is equipped with airtight isolating means, typically seals (37, 37', 37") providing an airtight seal between, on the one hand, the first hydraulic chamber (29) and a central part of the wedge (15) connected hydraulically to the cylinder (3) of the brake piston (5) and, on the other hand, said central part of the wedge (15) and the second hydraulic chamber (29').

8. Braking circuit according to any one of Claims 4 to 7, **characterized in that** the valve (25) is an electrically operated valve (27) open at rest.

## Patentansprüche

1. Bremskreis (100), insbesondere für ein Kraftfahrzeug, mit mindestens einer Hauptbremse (102), Hauptbetriebsbremse oder aktive Hauptbremse genannt, und einer Feststellbremse (104) vom Typ mit Blockierungsmitteln, die von einer Quelle für unter Druck stehendes Fluid aktiviert werden, und mit Mitteln zur mechanischen Verriegelung der Blockierungsmittel in einem angedrückten Zustand, **dadurch gekennzeichnet, dass** die Quelle für unter Druck stehendes Fluid eine Quelle (140) für unter Druck stehende Bremsflüssigkeit zur Betätigung der Hauptbetriebsbremse (102) ist, die einen Hauptbremszylinder (112) aufweist, der von einem aktiven pneumatischen Servomotor (110) zur Bremsunterstützung, der zum Bremskreis (100) gehört, betätigt wird.

2. Bremskreis (100) nach Anspruch 1, **dadurch gekennzeichnet, dass** er eine Steuerung (144) zur Betätigung der Feststellbremse (104) aufweist, die von der Steuerung (106) der Hauptbetriebsbremse bzw. aktiven Hauptbremse (102) unabhängig ist.

3. Bremskreis (100) nach Anspruch 2, **dadurch gekennzeichnet, dass** die Steuerung (144) zur Aktivierung der Feststellbremse (104) einen Rechner (146) zur Kontrolle der Zufuhr der unter Druck stehenden Bremsflüssigkeit aufweist.

4. Bremskreis (100) nach einem der vorhergehenden Ansprüche, vom Typ mit einer Scheibenfeststellbremse (104, 1), die einen Kolben (5) aufweist, der ein hydraulisches Mittel zum Andrücken mindestens eines Bremsbelagträgers bildet, der ein Mittel zur Blockierung an einer ein Drehelement bildenden Scheibe bildet, Mitteln (142) für die ausreichende Zufuhr eines unter Druck stehenden Fluids, um bei einer Steuerung die Bremsbelagträger fest an die Scheibe drücken zu können, Mitteln zur Blockierung des Kolbens in einem ersten Zustand, in dem die Bremsbelagträger fest an die Scheibe gedrückt sind, **dadurch gekennzeichnet, dass** die Blockierungsmittel einen Keil (15) und eine Betätigungseinrichtung (25, 29, 29') zur Verlagerung des Keils (15) bei einer Steuerung aufweist, wobei die Betätigungseinrichtung zur Verlagerung des Keils (15) eine erste Hydraulikkammer (29) und eine der ersten Hydraulikkammer gegenüberliegende zweite Hydraulikkammer (29') sowie ein Ventil (25) aufweist, das bei einer Steuerung (27) die Hydraulikkammern (29, 29') mit einer Quelle für unter hohem Druck stehende Bremsflüssigkeit verbinden kann, so dass der Keil (15) zwischen einer ersten Stellung, in der der Kolben (5) der Bremse frei zurückgeschoben werden kann, und einer zweiten Stellung bewegt wird, in welcher der Keil (15) das Zurückschieben des Kolbens (5) blockiert, und die Angriffsfläche des in der ersten Hydraulikkammer (29) herrschenden Drucks auf den Keil (15) sich von der Angriffsfläche des in der zweiten Hydraulikkammer (29') herrschenden Drucks auf den Keil (15) unterscheidet.

5. Bremskreis nach Anspruch 4, **dadurch gekennzeichnet, dass** die Feststellbremse ein Mittel zur hydraulischen Verbindung der beiden Hydraulikkammern (29, 29') aufweist, um die Gleichwertigkeit der in diesen beiden Hydraulikkammern (29, 29') herrschenden Drücke zu gewährleisten.

6. Bremskreis nach Anspruch 4 oder Anspruch 5, **dadurch gekennzeichnet, dass** eine erste Hydraulikkammer (29) an einem ersten axialen Ende (mit der Achse Y) des Keils (15) angeordnet ist und die zweite Hydraulikkammer (29') an einem zweiten axialen Ende (mit der Achse Y) des Keils (15), das zum ersten axialen Ende entgegengesetzt ist, angeordnet ist.

7. Bremskreis nach einem der Ansprüche 4 bis 6, **dadurch gekennzeichnet, dass** der Keil (15) mit Mitteln zur hermetischen Isolierung, üblicherweise Dichtungen (37, 37', 37"), versehen ist, die die hermetische Isolierung zum einen zwischen der ersten Hydraulikkammer (29) und einem Mittelabschnitt des Keils (15), der hydraulisch mit dem Zylinder (3) des Bremskolbens (5) verbunden ist, und zum anderen zwischen dem Mittelabschnitt des Keils (15) und der zweiten Hydraulikkammer (29') gewährleisten.

8. Bremskreis nach einem der Ansprüche 4 bis 7, **dadurch gekennzeichnet, dass** es sich bei dem Ventil (25) um ein elektrisch gesteuertes Ventil (27) handelt, das in der Ruhestellung offen ist.
